(19) Europäisches Patentamt
European Patent Office
Office européen des brevets

(11) EP 4 804 631 A1

(12) EUROPEAN PATENT APPLICATION
published in accordance with Art. 153(4) EPC

(43) Date of publication:
**09.09.2026 Bulletin 2026/37**

(21) Application number: **23960284.0**

(22) Date of filing: **30.11.2023**

(51) International Patent Classification (IPC):
***H04W 48/10*** *(2009.01)* ***H04W 56/00*** *(2009.01)*
***G01S 19/25*** *(2010.01)* ***H04W 84/06*** *(2009.01)*
***H04W 88/08*** *(2009.01)*

(52) Cooperative Patent Classification (CPC):
**G01S 19/25; H04W 48/10; H04W 56/00; H04W 84/06; H04W 88/08**

(86) International application number:
**PCT/KR2023/019616**

(87) International publication number:
**WO 2025/116085 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Samsung Electronics Co., Ltd.**
**Suwon-si, Gyeonggi-do 16677 (KR)**

(72) Inventors:
- **KIM, Sunhyun**
**Suwon-si Gyeonggi-do 16677 (KR)**
- **KANG, Jaeeun**
**Suwon-si Gyeonggi-do 16677 (KR)**
- **KIM, Dongmyung**
**Suwon-si Gyeonggi-do 16677 (KR)**
- **LEE, Deokhui**
**Suwon-si Gyeonggi-do 16677 (KR)**
- **LEE, Sangho**
**Suwon-si Gyeonggi-do 16677 (KR)**

(74) Representative: **Nederlandsch Octrooibureau**
**P.O. Box 29720**
**2502 LS The Hague (NL)**

# (54) METHOD AND APPARATUS FOR PROCESSING SYSTEM INFORMATION IN NON-TERRESTRIAL NETWORK

(57) The present disclosure relates to a 5G or 6G communication system for supporting a data transmission rate higher than that of a 4G communication system such as LTE. An operating method of a network device in a non-terrestrial network, according to an embodiment of the present disclosure, may comprise the operations of: receiving a first system information block (SIB), which is transmitted from a central unit (CU) positioned in a terrestrial network and includes configuration information of the non-terrestrial network; generating a second SIB by adding an information element for a satellite positioned in the non-terrestrial network to the first SIB; and broadcasting the second SIB.

320
First UE
310
Satellite access network
350
Core network
360
Data Network
340
Second UE
330
Terrestrial access network

FIG. 3



Processed by Luminess, 75001 PARIS (FR)

## Description

[Technical Field]

The disclosure relates to a method and apparatus for processing system information in a non-terrestrial network.

[Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100μsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

Research is being actively conducted in the field of non-terrestrial network (NTN) technology which enables a mobile communication system to utilize satellites and provide communication services in areas (e.g., the sea, the polar regions, remote areas, and the air) where communication services are not supported.

[Detailed Description of the Invention]

[Technical Problem]

The disclosure proposes a method for adjusting a generation time of system information, thereby improving the accuracy of satellite-related information.

[Technical Solution]

A method of operating a network device in a non-terrestrial network according to an embodiment of the disclosure may include an operation of receiving, from a central unit (CU) located in a terrestrial network, a first system information block (SIB) including configuration information for the non-terrestrial network, an operation of generating a second SIB by adding, to the first SIB, an information element for a satellite located in the non-terrestrial network, and an operation of broadcasting the second SIB.

According to an embodiment, the network device may be implemented in at least one of a packet data convergence control (PDCP) layer, a radio link control (RLC) layer, a medium access control (MAC) layer, and a service data adaptation protocol (SDAP) layer within a DU.

According to an embodiment, the network device may be implemented in an on-board computer (OBC) within the satellite located in the non-terrestrial network.

According to an embodiment, the network device may be implemented in a gateway located in the terrestrial network.

According to an embodiment, the network device may include an SIB classifier configured to identify the first SIB, a decoder configured to convert a format of the first SIB into a bit format, an SIB modifier (NTN SIB modifier) configured to generate the second SIB by adding the information element for the satellite located in the non-terrestrial network to the first SIB, and an encoder configured to convert a format of the second SIB into a format transmitted by the CU.

According to an embodiment, an operation method of the network may further include an operation of receiving, from a user equipment (UE), a message requesting additional information on the satellite, and an operation of transmitting, to the UE, a third SIB including the additional information on the satellite.

According to an embodiment, the additional information on the satellite may include at least one of a satellite power status, an average satellite antenna pointing error, a satellite attitude error, and a satellite processor usage rate.

According to an embodiment, the CU located in the terrestrial network may be located within a base station and may include a radio resource control (RRC) layer.

A network device in a non-terrestrial network according to an embodiment of the disclosure may include a transceiver and a controller. The controller may receive, from a central unit (CU) located in a terrestrial network, a first system information block (SIB) including configuration information for the non-terrestrial network. The controller may generate a second SIB by adding an information element for a satellite located in the non-terrestrial network to the first SIB. The controller may perform control to broadcast the second SIB.

[Advantageous Effects]

A method and apparatus according to embodiments of the disclosure may prevent deterioration in the performance of a network device due to a failure or delay in interworking with an external server.

In addition, a method and apparatus according to embodiments of the disclosure may reduce a difference between a generation time and a broadcasting time of system information, thereby improving the accuracy of satellite-related information.

[Brief Description of Drawings]

FIG. 1 is a diagram illustrating an example of a method of operating a satellite cell in non-terrestrial network (NTN) communication.

FIG. 2 is a diagram illustrating another example of a method of operating a satellite cell in non-terrestrial network (NTN) communication.

FIG. 3 is a diagram illustrating a structure of a communication system in which a mobile communication network and a satellite network are integrated, according to an embodiment of the disclosure.

FIG. 4A is a diagram illustrating an example of the structure of a communication system in which a mobile communication network and a satellite network are operated according to an embodiment of the disclosure.

FIG. 4B is a diagram illustrating another example of the structure of a communication system in which a mobile communication network and a satellite network are operated according to an embodiment of the disclosure.

FIGS. 5A to 5D are diagrams illustrating various examples of a communication system including a non-terrestrial network according to an embodiment of the disclosure.

FIGS. 6A and 6B are diagrams illustrating a process of generating and transmitting an SIB based on satellite-related information according to an embodiment of the disclosure.

FIG. 7 is a diagram illustrating an SIB IE insertion function for generating an SIB according to an embodiment of the disclosure.

FIG. 8 is a diagram illustrating a structure in which an SIB IE insertion function is implemented in a communication layer of a DU according to an embodiment of the disclosure.

FIG. 9 is a diagram illustrating a structure in which an SIB IE insertion function is implemented in an OBC of a satellite according to an embodiment of the disclosure.

FIG. 10 is a diagram illustrating a structure in which an SIB IE insertion function is implemented in a gateway according to an embodiment of the disclosure.

FIG. 11 is a diagram illustrating a process in which a gateway generates an SIB and a satellite adds satellite information according to an embodiment of the disclosure.

FIG. 12A is a diagram illustrating a process in which a UE requests additional satellite information from a base station according to an embodiment of the disclosure.

FIG. 12B is a diagram illustrating a process in which a UE requests additional satellite information from a satellite according to an embodiment of the disclosure.

FIG. 13 illustrates a structure of a UE according to an embodiment of the disclosure.

FIG. 14 illustrates a structure of a base station according to an embodiment of the disclosure.

FIG. 15 illustrates a structure of a satellite according to an embodiment of the disclosure.

[Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may

perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The disclosure relates to non-terrestrial network (NTN) technology which enables a mobile communication system to utilize a satellite and provide communication services to regions (e.g., the sea, the polar regions, remote areas, or the air) where communication services are not supported. NTN technology may be included not only in 5G, which has adopted NTN technology as a standard, but also in 6G, which is expected to be commercialized by 2030. Research on mobile communication systems, satellite systems, and/or systems combining mobile communication and satellite systems for supporting an NTN is being actively conducted.

The NTN is a technology that uses a satellite as a relay to construct a communication area that is available in areas where it is physically or economically unable to install a base station for mobile communication. Satellites capable of being used in the NTN may include geostationary earth orbit (GEO) satellites, medium earth orbit (MEO) satellites, or low earth orbit (LEO) satellites, and the LEO satellite in the NTN may guarantee a relatively low delay time in the NTN due to a correlation between the satellite’s altitude and communication delay time.

An NTN that uses the LEO satellite has an advantage of a low delay time because a radio round-trip time is short, as the LEO satellite exists at a low altitude (200 km to 2000 km) as compared to other satellites (e.g., the GEO satellite or the MEO satellite). However, compared to other satellites, the LEO satellite moves at a very high speed (e.g., 7.56 km/s at an altitude of 600 km), and thus a UE or a satellite antenna with no mobility has a characteristic in which a frequency/time synchronization is continuously changed. In the NTN utilizing the LEO satellite, there is a growing need for a technology to more accurately calculate and correct a change in frequency/time synchronization caused by the mobility of the LEO satellite.

Satellites may be classified according to satellite functions in an NTN. In the NTN, satellites may be classified based on 1) a transparent payload; or 2) a regenerative payload according to the functions of the satellites. In the case of a transparent payload, a satellite is equipped only with a function of amplifying and frequency-converting a signal, and transfers a signal to the ground without processing it, such as a reflector/repeater. A transparent payload satellite does not support a function capable of performing a role of a base station, such as a distributed unit (DU) or a central unit (CU). In the case of a regenerative payload, which is also referred to as an on-board processing (OBP) payload, a processor capable of performing processing is disposed in a satellite and the satellite may perform a role of a base station, such as a DU and a CU.

An embodiment of the disclosure may be applicable to a transparent payload satellite. In addition, an embodiment of the disclosure may be applicable to a regenerative payload in which a DU is only disposed in a satellite and a CU is located on the ground. In addition, an embodiment of the disclosure may be applicable to a case in which a CU is located on the ground and a DU is located in a satellite among regenerative payloads.

In the 3GPP NTN, standardization has been conducted to enable a user equipment (or UE) to access a base station via a satellite after performing self-correcting of frequency and time synchronization, partially. In order for the UE to correct the frequency and time synchronization, location and mobility-related information of the UE and location and mobility-related information of a satellite are essential. Accordingly, in the NTN standard, the UE may use a global navigation satellite system (GNSS) to measure the mobility and location information of the UE, and use a measurement result value for frequency and time synchronization correction and UE mobility management. In addition, the UE may obtain the location and mobility information of the satellite via a broadcasting message transmitted by a base station connected to the satellite.

According to an embodiment, a broadcasting message transmitted from the base station to the UE may include at least one of the location of the satellite, the speed of the satellite, the orbit information of the satellite, and information associated with a satellite cell formed by the satellite.

In the 3GPP NR NTN, system information block 19 (SIB19) is defined as the broadcasting message. The SIB19 message may include an information element (IE) regarding the orbit information, the location information, and the velocity information of the satellite connected to the base station transmitting the SIB19 message. The SIB19 message may include information (e.g., a satellite cell center location and diameter, surrounding satellite cell information) related to satellite cell operation.

According to an embodiment, the SIB19 message may be configured as follows.

[SIB 19]

SIB19 contains satellite assistance information for NTN access.

SIB19 information element

```
-- ASN1START
-- TAG-SIB19-START
SIB19-r17 ::= SEQUENCE {
    ntn-Config-r17                  NTN-Config-r17            OPTIONAL,
-- Need R
    ...
    ntn-NeighCellConfigList-r17                    NTN-NeighCellConfigList-r17
OPTIONAL,    -- Need R
    lateNonCriticalExtension          OCTET STRING            OPTIONAL,
    ...,
    [[
        ntn-NeighCellConfigListExt-v1720          NTN-NeighCellConfigList-r17
OPTIONAL     -- Need R
    ]]
}
NTN-NeighCellConfigList-r17 ::=
    SEQUENCE (SIZE (1..maxCellNTN-r17)) OF NTN-NeighCellConfig-r17

NTN-NeighCellConfig-r17 ::= SEQUENCE {
    ntn-Config-r17          NTN-Config-r17          OPTIONAL,    -- Need R

      carrierFreq-r17          ARFCN-ValueNR          OPTIONAL,    -- Need R
      physCellId-r17           PhysCellId             OPTIONAL     -- Need R
  }
  -- TAG-SIB19-STOP
  -- ASN1STOP
```

According to an embodiment, NTN-config included in the SIB19 message may be configured as follows.

[NTN-Config]

The IE NTN-Config provides parameters needed for the UE to access NR via NTN access.

NTN-Config information element

```
-- ASN1START
-- TAG-NTN-CONFIG-START
NTN-Config-r17 ::= SEQUENCE {
    epochTime-r17          EpochTime-r17          OPTIONAL,    -- Need R
    ...
    ephemerisInfo-r17      EphemerisInfo-r17      OPTIONAL,    -- Need R
    ta-Report-r17          ENUMERATED {enabled} OPTIONAL,      -- Need R
    ...
}
-- TAG-NTN-CONFIG-STOP
-- ASN1STOP
```

According to an embodiment, SIB19 may be generated by an RRC layer in a CU, and then may be transferred to a physical (PHY) layer through a transparent mode (TM) of an RLC and a transparent MAC of a MAC layer. The TM and transparent MAC may provide a forwarding function without performing an additional process or adding a header, and SIB19 may be transferred to the physical (PHY) layer after passing through the PDCP layer, the RLC layer, and the MAC layer. Thereafter, the PHY layer may transmit the received SIB according to a configured period.

The NR NTN may classify a satellite cell operation method as 1) an earth fixed cell, 2) a quasi-earth fixed cell, and 3) an earth moving cell. An earth-fixed cell is a method of forming a satellite cell that does not move via a satellite in a predetermined region, and is a cell formed by a GEO satellite having an orbital period identical to the rotational period of the earth. A quasi-earth fixed cell and an earth moving cell correspond to two methods classified when an MEO and/or LEO satellite having an orbital period different from the rotational period of the earth forms a satellite cell.

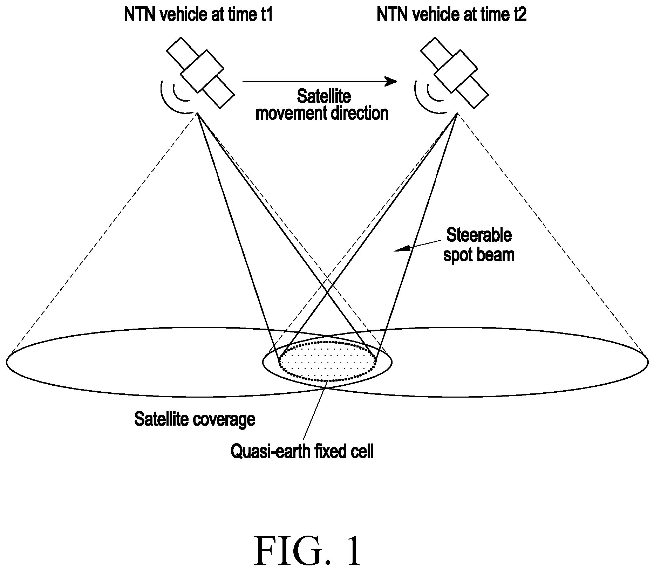

FIG. 1 is a diagram illustrating an example of a method of operating a satellite cell in non-terrestrial network (NTN) communication. Referring to FIG. 1, a satellite cell operation method using a quasi-earth fixed cell is illustrated.

The quasi-earth fixed cell is a method of forming a satellite cell in a predetermined region of the Earth's surface. However, in the case of an earth fixed cell, since a GEO satellite does not move relative to the surface of the earth, a single satellite is capable of continuously forming a cell in a predetermined region for 24 hours. However, LEO and MEO satellites move relative to the surface of the earth, and thus they may be incapable of continuously forming a cell in a predetermined region. In this case, a cell may be formed in the predetermined region by rotating an antenna of a beam that forms the satellite cell even when the satellite moves relative to the ground. When the satellite cell exists in a location beyond a maximum antenna rotation angle as the satellite moves, and the corresponding satellite is incapable of forming the cell, another satellite in the vicinity may take over the cell in the corresponding location and continue to form the cell.

Referring to FIG. 1, at time t1, an NTN device (NTN vehicle) may form satellite coverage in a predetermined region of the earth's surface. The satellite coverage may include a plurality of cells in fixed positions.

The NTN device (NTN vehicle) may move and may form satellite coverage in a predetermined region of the earth's surface at time t2. The satellite coverage may include a plurality of cells in fixed positions.

According to an embodiment, although the NTN device (NTN vehicle) moves, the NTN device (NTN vehicle) may implement the same quasi-earth fixed cell at time t1 and time t2 via a steerable spot beam.

According to an embodiment, a maximum elevation angle may be configured based on a location of the NTN device (NTN vehicle) and a center location of the satellite coverage. For example, a minimum elevation angle may be configured based on a location of the NTN device (NTN vehicle) and an edge position of the satellite coverage.

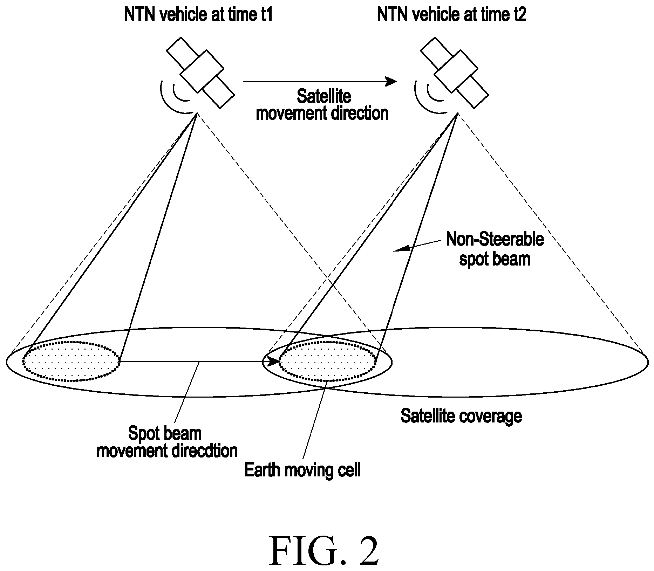

FIG. 2 is a diagram illustrating another example of a method of operating a satellite cell in non-terrestrial network (NTN) communication. Referring to FIG. 2, a satellite cell operation method using an earth moving cell is illustrated.

The earth moving cell is a method of operating a satellite cell to move together with a satellite along the satellite's movement, in a case in which an antenna forming a cell of a MEO satellite and/or a LEO satellite is incapable of rotating.

Referring to FIG. 2, satellite coverage may move according to the movement of an NTN device (NTN vehicle) from time t1 to time t2, to align with a varying location of the NTN device (NTN vehicle). The satellite coverage may include a plurality of cells in moving positions (cells in fixed position).

According to an embodiment, as the NTN device (NTN vehicle) moves, the NTN device (NTN vehicle) may implement different earth moving cells at time t1 and time t2 through a non-steerable spot beam. According to an embodiment, the earth moving cell may move according to the movement of the NTN device (NTN vehicle) to align with its location.

For example, a maximum elevation angle may be configured based on a location of the NTN device (NTN vehicle) and a center location of the satellite coverage. For example, a minimum elevation angle may be configured based on a location of the NTN device (NTN vehicle) and an edge location of the satellite coverage.

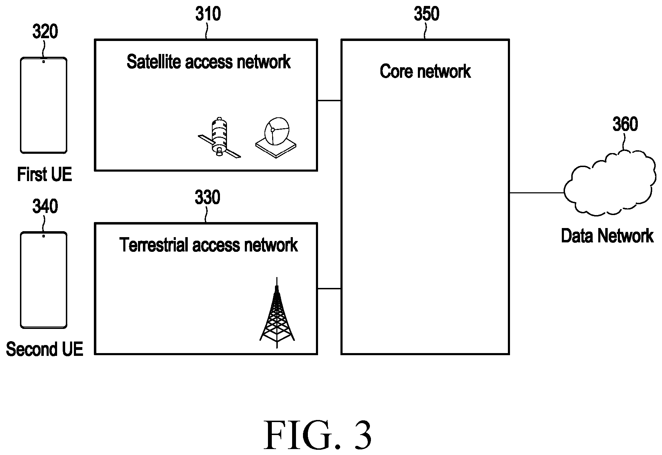

FIG. 3 is a diagram illustrating a structure of a communication system in which a mobile communication network and a satellite network are integrated, according to an embodiment of the disclosure.

Referring to FIG. 3, a communication system may include a satellite access network 310, a first UE 320 that is connected to the satellite access network 310 for communication, a terrestrial access network 330, a second UE 340 that is connected to the terrestrial access network 330 for communication, a data network 350, and a core network 360.

The satellite access network 310 may include at least one satellite and at least one gateway. The terrestrial access network 330 may include at least one base station. The data network 350 may include at least one server that transmits and receives data. The core network 360 may be connected to each of the satellite access network 310, the terrestrial access network 330, and the data network 350, and may control network communication.

According to an embodiment, at least one of the satellite access network 310, the terrestrial access network 330, the data network 350, and the core network 360 may operate according to the 3GPP NR standard.

An NTN may be configured to combine the satellite access network 310 and the terrestrial access network 330. The first UE 320 and/or the second UE 340 may use both the satellite access network 310 and the terrestrial access network 330 to communicate with a server in the data network 350. The core network 360 may manage (or control) at least one base station within the terrestrial access network 330 and at least one satellite within the satellite access network 310.

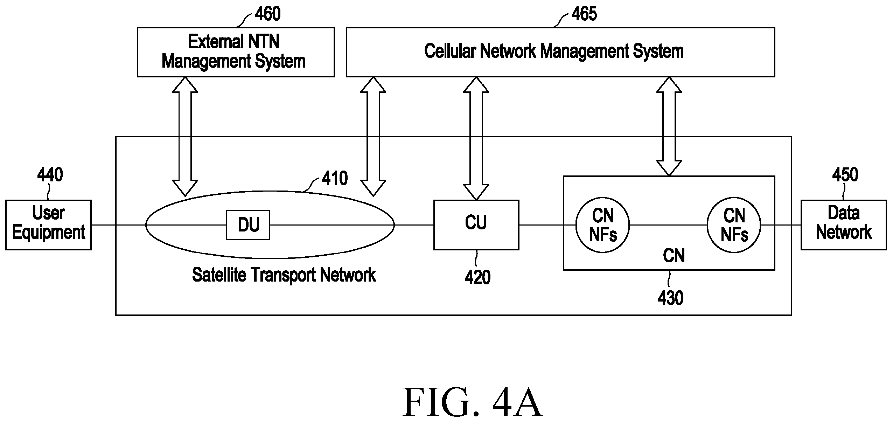

FIG. 4A is a diagram illustrating an example of a communication system in which a mobile communication network and a satellite network are operated according to an embodiment of the disclosure. FIG. 4A illustrates a structure of a communication system in a regenerative payload. Referring to FIG. 4A, a communication system supporting a regenerative payload may include a satellite transport network 410 including a distributed unit DU, a central unit (CU) 420, a core network 430 including at least one network function (NF), at least one UE 440 connected to the satellite transport network 410, a data network 450 connected to the core network 430, an external NTN management system 460, and a cellular network management system 465.

The satellite transport network 410 including the DU may communicate with at least one of the at least one UE 440, the external NTN management system 460, and the cellular network management system 465 to transmit and receive data and/or a message. The CU 420 and/or the core network 430 may communicate with the cellular network management system 465 to transmit and receive data and/or a message.

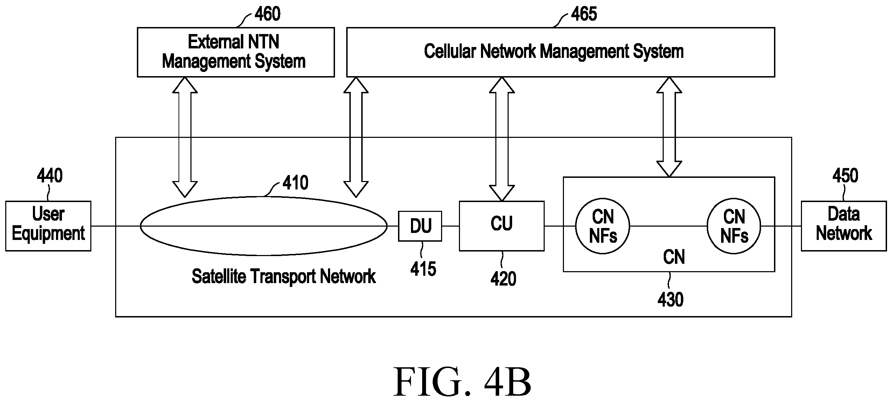

FIG. 4B is a diagram illustrating another example of a communication system in which a mobile communication network and a satellite network are operated according to an embodiment of the disclosure. FIG. 4B illustrates a structure of a communication system in a transparent payload.

Referring to FIG. 4B, a communication system supporting a transparent payload may include the satellite transport network 410, a DU 415, the CU 420, the core network 430 including at least one network function (NF), the at least one UE 440 connected to the satellite transport network 410, the data network 450 connected to the core network 430, the external NTN management system 460, and the cellular network management system 465.

The DU 415 implemented outside the satellite transport network 410 may communicate with at least one of the CU 420, the at least one UE 440, the external NTN management system 460, and the cellular network management system 465 to transmit and receive data and/or a message. The CU 420 and/or the core network 430 may communicate with the cellular network management system 465 to transmit and/or receive data and/or messages.

The disclosure is mainly directed to the case in which a satellite communication network and a mobile communication network are separately operated and cooperatively used.

A terrestrial network (TN) may perform communication via a mobile communication network (cellular network) deployed from a user equipment (or UE) to a core network (CN) and managed by a communication service provider. The mobile communication network may be managed by a server of the communication service provider, and the server may be designed according to the 3GPP standard.

In the case of an NTN, a network other than a network of a communication service provider may exist in some sections of a communication path from a UE to a CN. For example, in the case of a transparent NTN payload, a network entity (NE) such as an NTN gateway and/or an NTN vehicle may exist between a base station and a UE. According to an embodiment, the NTN NE may be managed by a server of a communication service provider, but may also be managed by a separate system that installs and manages an NE, instead of the communication service provider.

The terrestrial network (TN) differs from the NTN in that all connections between the UE and the CN are manageable in the TN, while some sections may not be manageable by the CN in the NTN. In this case, a service may be provided through interworking between the management system that manages the sections and a system of the mobile

communication network.

According to an embodiment, an SIB (e.g., SIB19) for a satellite is provided to operate the NTN, and to generate the corresponding SIB message, a centralized unit (CU) which generates the message requires not only mobile communication network-related information but also satellite-related information (e.g., a satellite ID, a satellite location, a satellite speed, and the like).

According to an embodiment, a CU of an RAN that manages a cell of the NTN may store a state related to a satellite that forms a cell managed by the CU and satellite information, or may obtain a satellite state change through information exchange with an external satellite server. According to an embodiment, the CU may have a function of storing satellite orbit information and a function of calculating an orbit, and as the number of satellites increases, additional process consumption may occur due to the orbit information storage space or complexity of the orbit calculation function.

If a satellite that forms a cell managed by the CU is managed according to a predetermined schedule (e.g., satellite 1 forms the corresponding cell from 12:01 to 12:05, and satellite 2 forms the corresponding cell from 12:05 to 12:10), the satellite that forms the cell managed by the CU may be predicted, and the information of the corresponding satellite may be calculated and acquired. In this case, the CU needs a procedure of periodically checking whether it is being operated according to the predetermined schedule, through interworking with a satellite network management server.

In the case of a satellite network that flexibly manages the satellite network through a plurality of satellites and performs efficient operation of the satellite network, a fixed schedule may not be used, and a satellite cell forming structure may be flexibly changed according to a state of the satellite network (e.g., the number of users accessing a satellite, remaining power of a satellite, and performance of a satellite processor). In the operation method, in order to identify a change of a satellite that forms a cell managed by the CU, close information exchange with the satellite network is required.

However, when the CU generates an SIB, the following disadvantages may exist.

1) Degradation of the performance of the NTN due to a phenomenon occurring in an information exchange process with a satellite network server;
If the CU exchanges satellite-related information periodically or as needed through information exchange with the satellite network server, a delay and failure may occur in a corresponding information exchange interface. In this case, the generation of the SIB required to access and maintain the satellite network may be delayed, which may cause degradation of the performance of the NTN.
2) Additional processing functions required for satellite orbit information calculation in the CU, and delay caused by the corresponding calculation;
If the CU has orbital information available for calculating a satellite orbit and satellite network operation schedule information, the CU calculates satellite location and speed information based on the orbital information of the satellite and inserts the information into the SIB. In this case, as the number of satellites increases and a change period of a satellite that forms a cell becomes shorter, a calculation overhead on the CU increases. This requires the CU to have more processors.
3) Performance degradation due to an error from the actual satellite information caused by a difference between a generation time of the SIB generated by the CU and a broadcasting time by a DU;
The satellite information included in the SIB generated by the CU may include satellite location/speed information at the time when the SIB is generated. The CU that generates the SIB is on the ground, and the DU that broadcasts the SIB is in a satellite connected to the CU through an NTN gateway, so there is a difference between the actual generation time and the broadcasting time. In the case of a satellite network that uses an inter-satellite link (ISL), a distance and time difference between the DU and the CU may be even greater. Due to the time difference, an error between the actual satellite location/speed and the satellite location/speed included in the SIB may occur, and the accuracy of various functions (e.g., Doppler effect correction, timing advance calculation, etc.) in the NTN that use the corresponding information may be reduced, which may cause degradation of the performance of the NTN.

The disclosure proposes a method in which a CU generates a portion of an SIB autonomously without interworking with an external satellite server, and then another network entity completes satellite information. Through this, an SIB may be generated without interworking with the satellite network server, thus degradation of the performance of the NTN may be prevented.

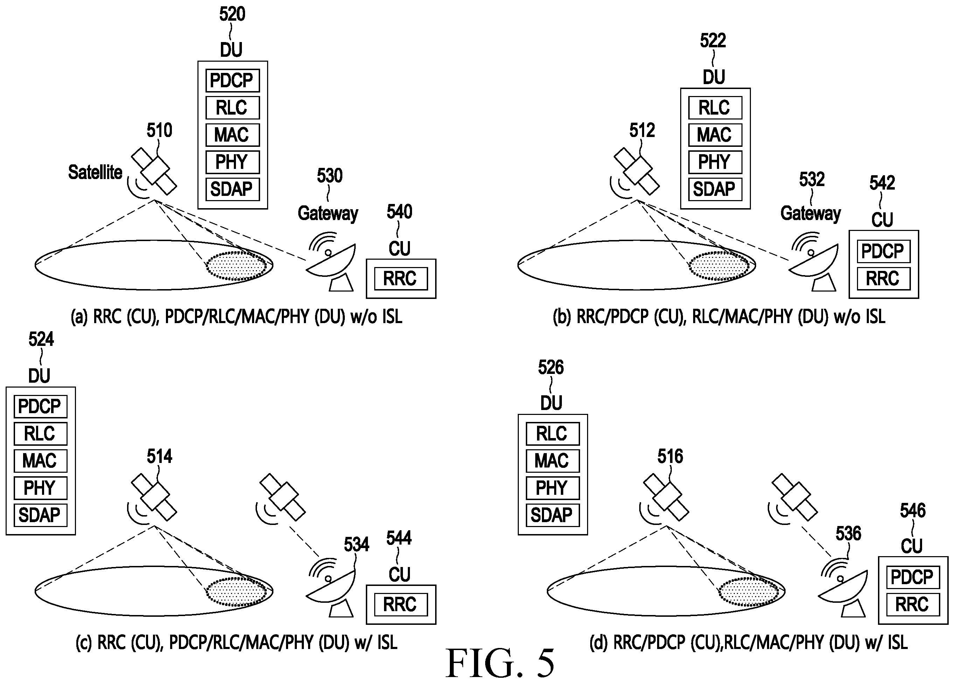

FIGS. 5A to 5D are diagrams illustrating various examples of a communication system including a non-terrestrial network according to an embodiment of the disclosure.

Referring to FIGS. 5A to 5D, a communication system may include a satellite (or NTN vehicle) (any one of 510, 512, 514, and 516), a distributed unit (DU) (any one of 520, 522, 524, and 526) that is in charge of an NTN cell, an NTN gateway (any one of 530, 532, 534, and 536), and a central unit (CU) (any one of 540, 542, 544, and 546).

A link between the satellite (any one of 510, 512, 514, and 516) and the NTN gateway (any one of 530, 532, 534, and 536) may be referred to as a feeder link. A link between the satellites 510, 512, 514, and 516 may be referred to as an inter-satellite link (ISL).

In the disclosure, a protocol stack may be the same as an NR NTN protocol, and may include a physical (PHY) layer, a medium access control (MAC) layer, a radio link control (RLC) layer, a packet data convergence control (PDCP) layer, a radio resource control (RRC) layer, and a service data adaptation protocol (SDAP) layer.

In an NTN illustrated in FIG. 5A, the DU 520 is located in the satellite 510 and may include a PDCP layer, an RLC layer, a MAC layer, a PHY layer, and an SDAP layer. The CU 540 is located on the ground (or in a base station) and may include an RRC layer. The CU 540 may transmit information and/or a message to the gateway 530 through the RRC layer, and the gateway 530 may transmit the information and/or the message to the satellite 510.

In an NTN illustrated in FIG. 5B, the DU 522 is located in the satellite 512 and may include an RLC layer, a MAC layer, a PHY layer, and an SDAP layer. The CU 542 is located on the ground (or in a base station) and may include a PDCP layer and an RRC layer. The CU 542 may transmit information and/or a message to the gateway 532 through the PDCP layer and the RRRC layer, and the gateway 532 may transmit the information and/or the message to the satellite 512.

In an NTN illustrated in FIG. 5C, the DU 520 is located in a first satellite 514 and may include a PDCP layer, an RLC layer, a MAC layer, a PHY layer, and an SDAP layer. The first satellite 514 may perform inter-satellite communication with a second satellite 515. The CU 544 is located on the ground (or in a base station) and may include an RRC layer. The CU 544 may transmit information and/or a message to the gateway 534 through the RRC layer, and the gateway 540 may transmit the information and/or the message to the second satellite 515. The second satellite 515 may transmit the information and/or message to the first satellite 514.

In an NTN illustrated in FIG. 5D, the DU 526 is located in the first satellite 516 and may include an RLC layer, a MAC layer, a PHY layer, and an SDAP layer. A first satellite 516 may perform inter-satellite communication with a second satellite 517. The CU 546 is located on the ground (or in a base station) and may include a PDCP layer and an RRC layer. The CU 546 may transmit information and/or a message to the gateway 536 through the PDCP layer and the RRRC layer, and the gateway 536 may transmit the information and/or the message to the second satellite 517. The second satellite 517 may transmit the information and/or the message to the first satellite 516.

In the disclosure, the CU 540, 542, 544, or 546 may exist on the ground together with the gateway 530, 532, 534, or 536, and the DU 520, 522, 524, or 526 may exist in the satellite. The RRC layer may necessarily exist in the CU 540, 542, 544, or 546, and the PHY layer may necessarily exist in the DU 520, 522, 524, or 526. According to an embodiment, at least one of the RLC layer, the MAC layer, and the PDCP layer may exist in the CU 540, 542, 544, or 546 or the DU 520, 522, 524, or 526. According to an embodiment, the RRC layer may exist simultaneously in the CU 540, 542, 544, or 546 and the DU 520, 522, 524, or 526.

The disclosure is mainly directed to the case in which the CU 540, 542, 544, or 546 exists on the ground and the DU 520, 522, 524, or 526 exists in a satellite in an NTN using a regenerative payload. According to an embodiment, the CU 540, 542, 544, or 546 and the gateway 530, 532, 534, or 536 may be connected to each other through a terrestrial wired network. According to an embodiment, the gateway 530, 532, 534, or 536 and the DU 520, 522, 524, or 526 may be connected through a feeder link when an ISL is not used, and through a feeder link and an ISL when an ISL is used.

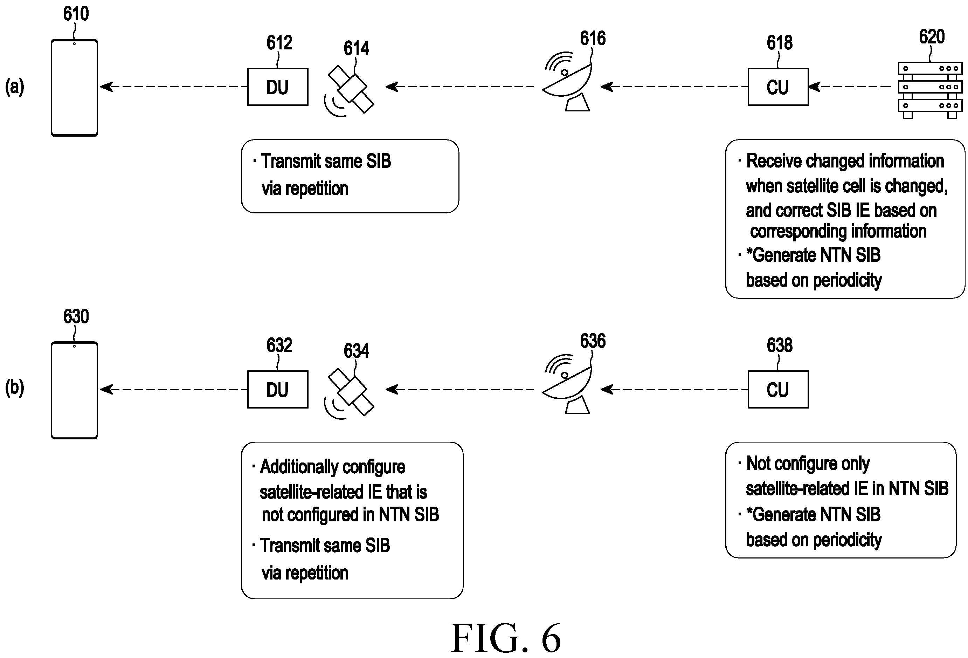

FIGS. 6A and 6B are diagrams illustrating a process of generating and transmitting an SIB based on satellite-related information according to an embodiment of the disclosure.

Referring to FIG. 6A, a communication system may include a UE 610, a satellite 614 in which a DU 612 is located, a gateway 616, a CU 618, and a satellite network server 620.

The CU 618 may receive information associated with whether a satellite is changed and/or changed satellite-related information from the satellite network server 620 when a satellite that forms a satellite cell is changed. If satellite orbit information exists in the CU 618, the CU 618 may receive only information associated with whether a satellite is changed from the satellite network server 620. Subsequently, the CU 618 may generate an NTN SIB (e.g., SIB19) based on a generation period (periodicity) of the NTN SIB, and transmit the generated NTN SIB to the DU 612. The DU 612 may receive the NTN SIB transmitted from the CU 618 through the gateway 616. The DU 612 may broadcast the NTN SIB based on a repetition value, which is a predetermined periodicity, through a PHY layer. Thereafter, the UE 610 may receive the NTN SIB broadcasted by the DU 612.

Referring to FIG. 6B, a communication system may include a UE 630, a satellite 634 in which a DU 632 is located, a gateway 636, and a CU 638.

The CU 638 may generate an NTN SIB composed of the remaining information excluding satellite-related information (or IE) based on a generation period (periodicity), and transmit the generated NTN SIB to the DU 632. The DU 632 may receive the NTN SIB excluding the satellite-related information (or IE), which is transmitted from the CU 638 through the gateway 636. The DU 632 may generate satellite-related information (or IE) based on information obtained from the satellite 634, and may add the satellite-related information (or IE) to the NTN SIB. The DU 632 may broadcast the NTN SIB based on a repetition value, which is a predetermined periodicity, through a physical (PHY) layer. Subsequently, the UE 610 may receive the NTN SIB broadcasted by the DU 612.

In the disclosure, a configuration method in a way that implies that some IEs in an NTN SIB are generated by the DU 632 rather than the CU 638 may be additionally required. According to an embodiment, an SIB is configured according to abstract syntax notation one (ASN. 1) syntax, and a variable for the above additional configuration method may not be

newly defined in the corresponding syntax. When an SIB is configured based on the ASN.1 syntax, the configuration method in a way that implies that some IEs in an NTN SIB are configured by a DU may be performed through the following two examples. In the disclosure, although ASN. 1 syntax is described as an example of a syntax for configuring an SIB, the technical idea of the disclosure is not limited thereto, and the SIB may be generated based on at least one of various syntaxes.

A first example method is a method of defining, as a "NULL" value, an IE that needs to be configured at a location other than the CU 638 among IEs included in an NTN SIB. In the DU 632 (not the CU 638), a portion configured as a NULL value among the IEs included in the SIB may be determined as an IE to be additionally configured by the DU 632, and the DU 632 may configure the IE with the corresponding NULL value to be suitable for a format corresponding to the IE. IEs configured as a NULL value in the SIB may all be information related to a satellite network. According to an embodiment, in the satellite 634, the DU 632 may directly access the corresponding IE values and configure the corresponding IEs. According to an embodiment, the gateway 636 may access information stored in a database of the gateway 636 to configure the corresponding IEs.

An example of an SIB configured according to the first example method is as follows.

[NTN SIB (e.g., SIB19) information element]

```
-- ASN1START
-- TAG-SIB19-START
SIB19-r17 ::= SEQUENCE {
    ntn-Config-r17                                  NTN-Config-r17
OPTIONAL,    -- Need R
    t-Service-r17                                   NULL
OPTIONAL,    -- Need R
    referenceLocation-r17                           NULL
OPTIONAL,    -- Need R
    distanceThresh-r17                              NULL
```

```
OPTIONAL,       -- Need R
        ntn-NeighCellConfigList-r17                        NTN-NeighCellConfigList-r17
OPTIONAL,       -- Need R
        lateNonCriticalExtension                                    OCTET     STRING
OPTIONAL,
        ...,
        [[
                ntn-NeighCellConfigListExt-v1720            NTN-NeighCellConfigList-r17
OPTIONAL      -- Need R
        ]]
}
NTN-NeighCellConfigList-r17 ::=
        SEQUENCE (SIZE (1..maxCellNTN-r17)) OF NTN-NeighCellConfig-r17

NTN-NeighCellConfig-r17 ::= SEQUENCE {
        ntn-Config-r17              NTN-Config-r17            OPTIONAL,     -- Need R
        carrierFreq-r17            ARFCN-ValueNR              OPTIONAL,     -- Need R
        physCellId-r17              PhysCellId                OPTIONAL      -- Need R
}
-- TAG-SIB19-STOP
-- ASN1STOP
```

[NTN-Config information element]

```
-- ASN1START
-- TAG-NTN-CONFIG-START
NTN-Config-r17 ::= SEQUENCE {
        epochTime-r17                                                                NULL
OPTIONAL,       -- Need R
        ntn-UlSyncValidityDuration-r17       ENUMERATED {s5, s10, s15, s20, s25,
s30, s35,
                                                            s40, s45, s50, s55, s60,
s120, s180, s240, s900}      OPTIONAL,       -- Cond

        SIB19
```

```
            cellSpecificKoffset-r17                                        NULL
OPTIONAL,     -- Need R
            kmac-r17                                                       NULL
OPTIONAL,     -- Need R
            ta-Info-r17                    TA-Info-r17               OPTIONAL,
-- Need R
            ntn-PolarizationDL-r17                                         NULL
OPTIONAL,     -- Need R
            ntn-PolarizationUL-r17                                         NULL
OPTIONAL,     -- Need R
            ephemerisInfo-r17              EphemerisInfo-r17         OPTIONAL,
-- Need R
            ta-Report-r17                            ENUMERATED   {enabled}
OPTIONAL,     -- Need R
      ...
}
EpochTime-r17 ::= SEQUENCE {
      sfn-r17             NULL,
      subFrameNr-r17 NULL
}
TA-Info-r17 ::= SEQUENCE {
      ta-Common-r17                    NULL,
      ta-CommonDrift-r17               NULL,
      ta-CommonDriftVariant-r17    NULL
}
-- TAG-NTN-CONFIG-STOP
-- ASN1STOP
```

[EphemerisInfo information element]

```
-- ASN1START
-- TAG-EPHEMERISINFO-START
EphemerisInfo-r17 ::= CHOICE {
      positionVelocity-r17        PositionVelocity-r17,
      orbital-r17                      Orbital-r17
```

```
}
PositionVelocity-r17 ::= SEQUENCE {
    positionX-r17       NULL,
    positionY-r17       NULL,
    positionZ-r17       NULL,
    velocityVx-r17      NULL,
    velocityVy-r17      NULL,
    velocityVz-r17      NULL
}
Orbital-r17 ::= SEQUENCE {
    semiMajorAxis-r17       NULL,
    eccentricity-r17        NULL,
    periapsis-r17           NULL,
    longitude-r17           NULL,
    inclination-r17         NULL,
    meanAnomaly-r17         NULL
}

PositionStateVector-r17 ::= NULL

VelocityStateVector-r17 ::= NULL

-- TAG-EPHEMERISINFO-STOP
-- ASN1STOP
```

A second example method is a method of defining an IE, which needs be configured at a location other than the CU 638, as a new field by reorganizing IEs included in an NTN SIB. The corresponding field is configured according to a standard or a predetermined technical rule, and the DU 632 may autonomously configure the corresponding field even if the corresponding field does not exist. The following drawing shows an example in which NTN-PayloadInfo is redefined as a field to be configured by the DU 632, not by the CU 638. An example of an NTN SIB configured according to the second example method is given in the following drawings.

[SIB generated by RRC in CU]

```
-- ASN1START
-- TAG-NTN-START
SIB_NTN-r17 ::= SEQUENCE {
    ntn-nonPayloadInfo          OPTIONAL,    -- Need R
    ntn-PayloadInfo             OPTIONAL,    -- Need R
    tn-Info                     OPTIONAL,    -- Need R
}

TN-Info ::= SEQUENCE {
    NeighborTNCell     cell-Config          OPTIONAL,    -- Need R
}

NTN-nonPayloadInfo ::= SEQUENCE {
    ta-Info-r17        TA-Info-r17                  OPTIONAL,    -- Need R
    ta-Report-r17      ENUMERATED {enabled}         OPTIONAL,    -- Need R
}

-- TAG-SIB_NTN-STOP
-- ASN1STOP
```

[SIB generated in DU]

```
-- ASN1START
-- TAG-NTN-START
SIB_NTN-r17 ::= SEQUENCE {
    ntn-nonPayloadInfo          OPTIONAL,    -- Need R
    ntn-PayloadInfo             OPTIONAL,    -- Need R
    tn-Info                     OPTIONAL,    -- Need R
}

TN-Info ::= SEQUENCE {
    NeighborTNCell     cell-Config          OPTIONAL,    -- Need R
}
```

```
NTN-nonPayloadInfo ::= SEQUENCE {
    ta-Info-r17         TA-Info-r17                 OPTIONAL,    -- Need R
    ta-Report-r17       ENUMERATED {enabled}        OPTIONAL,    -- Need R
}

NTN-PayloadInfo ::= SEQUENCE {
    ephemerisInfo                EphemerisInfo          OPTIONAL,    -- Need
R
    epochTime-r17                     EpochTime-r17             OPTIONAL,    --
Need R
    ntn-UlSyncValidityDuration ENUMERATED {s5, s10, s15, s20, s25, s30, s35,
                                               s40, s45, s50, s55, s60, s120,
s180,
                                               s240,                    s900}
OPTIONAL,    -- Need R
    cellSpecificKoffset          INTEGER (1..1023)     OPTIONAL,     -- Need R
    kmac-r17                          INTEGER (1..512)        OPTIONAL,     --
Need R
    ntn-PolarizationDL           ENUMERATED {rhcp, lhcp, linear} OPTIONAL,
-- Need R
    ntn-PolarizationUL           ENUMERATED {rhcp, lhcp, linear} OPTIONAL,
-- Need R
}

-- TAG-NTN-STOP
-- ASN1STOP
```

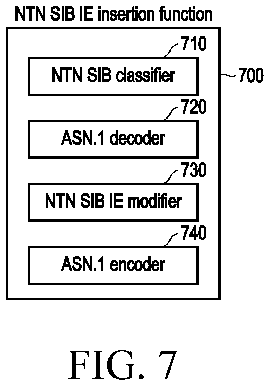

FIG. 7 is a diagram illustrating an SIB IE insertion function for generating an SIB according to an embodiment of the disclosure.

Referring to FIG. 7, an NTN SIB IE insertion function 700 may include an NTN SIB classifier 710, an ASN.1 decoder 720, an NTN SIB modifier 730, and an ASN. 1 encoder 740. According to an embodiment, the NTN SIB IE insertion function 700 may be implemented as hardware and/or software and may be included and/or installed in a specific device.

An NTN SIB may be configured based on the ASN. 1 syntax according to a format configured in RRC, and encoded in a bit format, and then transmitted. In other layers excluding RRC, IEs in the NTN SIB may not be read or modified. According to an embodiment, in the disclosure, an NTN SIB needs to be modified during processing, and the "NTN SIB IE insertion function" that is capable of providing the corresponding function is required to exist in a location where the corresponding function is to be performed.

The NTN SIB classifier 710 may identify whether an SIB is an NTN-related SIB. The ASN. 1 decoder 720 may convert a format expressed in the ASN.1 syntax into a bit format. The NTN SIB modifier 730 may obtain an NTN SIB, and may modify and/or add information (e.g., satellite-related IE) associated with at least one IE included in the SIB. The ASN. 1 encoder 740 may convert a bit format into a format expressed in the ASN.1 syntax.

According to an embodiment, the NTN SIB IE insertion function 700 may be implemented in a DU in a satellite, a terrestrial CU, and/or a network entity existing between a DU in a satellite and a terrestrial CU. In the following embodiments, the NTN SIB IE insertion function 700 is described and illustrated in the following three cases: 1) a case in which the function is present in a communication layer (MAC, RLC, PDCP, and RRC) in a satellite; 2) a case in which the function is present in an on-board computer (OBC) in a satellite; and 3) a case in which the function is present in an NTN gateway.

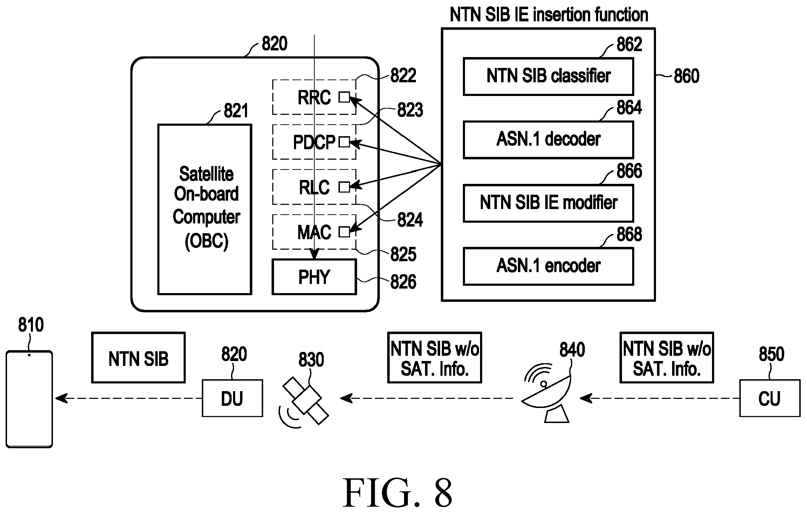

FIG. 8 is a diagram illustrating a structure in which an SIB IE insertion function is implemented in a communication layer of a DU according to an embodiment of the disclosure.

Referring to FIG. 8, a communication system may include a UE 810, a satellite 830 including a DU 820, a gateway 840, and a CU 850. The CU 850 may generate an NTN SIB excluding satellite information (or a satellite-related IE). The CU 850 may transmit the NTN SIB excluding the satellite information (or satellite-related IE) to the DU 820 through the gateway 840.

The satellite 830 may include a satellite on-board computer (OBC) 821. The DU 820 may include an RRC layer 822, a PDCP layer 823, an RLC layer 824, a MAC layer 825, and a PHY layer 826. According to an embodiment, an SIB IE insertion function 860 may be implemented in at least one of the PDCP layer 823, the RLC layer 824, and the MAC layer 825 in the DU 820.

In the communication protocol structure, the PDCP layer 823, the RLC layer 824, and the MAC layer 825 above the PHY layer 826 may be implemented in a form that allows pass-through without adding or processing a header, and the NTN SIB IE insertion function 860 may be located in any of the PDCP layer 823, the RLC layer 824, or the MAC layer 825. According to an embodiment, if a split RRC in which some functions of the RRC are managed by the DU 820 exists, the NTN SIB IE insertion function 860 may perform the corresponding functions in the RRC layer existing in the DU 820. In this case, if components same as components configuring the NTN SIB IE insertion function 860 exist in the split RRC, some duplicated components may not exist in the corresponding function.

The NTN SIB IE insertion function 860 may configure satellite information (or satellite-related IE) and generate an NTN SIB including the satellite information (or satellite-related IE). The NTN SIB IE insertion function 860 may include an NTN SIB classifier 862, an ASN. 1 decoder 864, an NTN SIB modifier 866, and an ASN.1 encoder 868. According to an embodiment, the NTN SIB IE insertion function 860 may be implemented as hardware and/or software and may be included and/or installed in the DU 820.

The NTN SIB classifier 862 may identify whether an SIB is an NTN-related SIB. The ASN. 1 decoder 864 may convert a format expressed in the ASN. 1 syntax into a bit format. The NTN SIB modifier 866 may obtain an NTN SIB, and may modify and/or add information (e.g., satellite-related IE) associated with at least one IE in the NTN SIB. The ASN. 1 encoder 868 may convert a bit format into a format expressed in the ASN.1 syntax.

The CU 860 may configure an NTN SIB (e.g., SIB19), and in this process, configuration may be completed without configuring IEs associated with a satellite network and configurable via interworking with the satellite network. The NTN SIB excluding the satellite network-related information may be transmitted to the satellite 830 through the gateway 840. The satellite 830 may transmit the NTN SIB excluding the satellite network-related information to the DU 820 having an NTN protocol stack.

The NTN SIB may be transmitted to the physical layer 826 by having satellite network-related information added to the NTN SIB in which no received satellite network-related information is included, via the NTN SIB IE insertion function 860, in the process of passing through the layers of the DU 820. The PHY layer 826 may ultimately receive the NTN SIB including all information from the upper layer, and broadcast the NTN SIB at a predetermined interval.

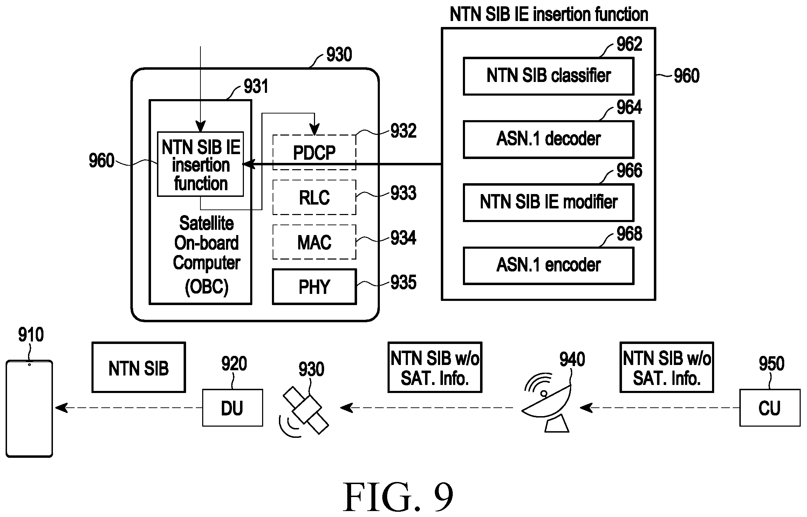

FIG. 9 is a diagram illustrating a structure in which an NTN SIB IE insertion function is implemented in an OBC of a satellite according to an embodiment of the disclosure.

Referring to FIG. 9, a communication system may include a UE 910, a satellite 930 including a DU 920, a gateway 940, and a CU 950. The CU 950 may generate an NTN SIB excluding satellite information (or a satellite-related IE). The CU 950 may transmit the NTN SIB excluding the satellite information (or satellite-related IE) to the DU 920 through the gateway 940.

The satellite 930 may include a satellite on-board computer (OBC) 931. The DU 920 in the satellite 930 may include a PDCP layer 932, an RLC layer 933, a MAC layer 934, and a PHY layer 935. According to an embodiment, the NTN SIB IE insertion function 960 may be implemented in the OBC 931.

The NTN SIB IE insertion function 960 may configure satellite information (or satellite-related IE), and generate an NTN SIB including the satellite information (or satellite-related IE). The NTN SIB IE insertion function 960 may include an NTN SIB classifier 962, an ASN. 1 decoder 964, an NTN SIB modifier 966, and an ASN.1 encoder 968.

A feeder link between the gateway 940 and the satellite 930 may perform transmission via a satellite protocol stack independently introduced by a satellite network. In this case, a packet generated by the CU 950 is encapsulated by the gateway 940 into a satellite protocol stack and transmitted, and the satellite 930 may receive the encapsulated packet, decapsulate the same through the OBC 931, and transmit the same to the NTN protocol stack. After decapsulation is performed in the OBC 931, there may be the NTN SIB IE insertion function 960 in the OBC 931.

The CU 950 may configure an NTN SIB (e.g., an NR NTN SIB) and, in this process, may complete configuration without configuring IEs that are associated with a satellite network and configurable via interworking with the satellite network. The NTN SIB excluding the satellite network-related information may be transmitted to the OBC 931 of the satellite 930 through the gateway 940. The OBC 931 may, after performing decapsulation, additionally configure the satellite network-related information to the NTN SIB having no satellite network-related information via the NTN SIB IE insertion function 960, and then transmit the NTN SIB to the PHY layer 935. The PHY layer 935 may ultimately receive the NTN SIB including all information from the upper layer, and broadcast the NTN SIB at a predetermined interval.

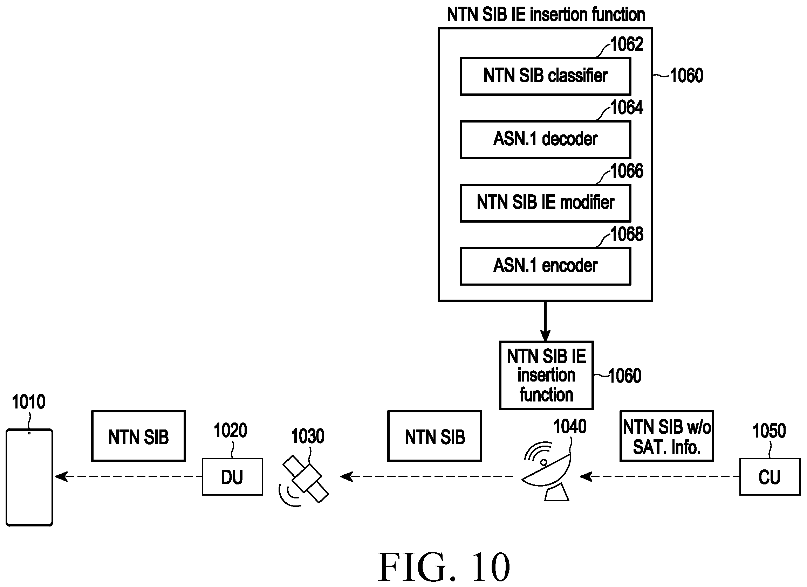

FIG. 10 is a diagram illustrating a structure in which an SIB IE insertion function is implemented in a gateway according to an embodiment of the disclosure.

Referring to FIG. 10, a communication system may include a UE 1010, a satellite 1030 including a DU 1020, a gateway 1040, and a CU 1050. The CU 1050 may generate an NTN SIB excluding satellite information (or a satellite-related IE). The CU 1050 may transmit the NTN SIB excluding the satellite information (or satellite-related IE) to the DU 1020 through the gateway 1040.

An NTN SIB IE insertion function 1060 may be implemented in the gateway 1040. The NTN SIB IE insertion function 1060 may configure satellite information (or a satellite-related IE), and generate an NTN SIB including the satellite information (or satellite-related IE). The NTN SIB IE insertion function 1060 may include an NTN SIB classifier 1062, an ASN. 1 decoder 1064, an NTN SIB modifier 1066, and an ASN. 1 encoder 1068.

The gateway 1040 may always store information related to a satellite orbit and a satellite location since the gateway 1040 configures and/or manages a feeder link and a plurality of satellites. If the gateway 1040 includes the NTN SIB IE insertion function 1060, the NTN SIB IE insertion function 1060 may exist in a stage before encapsulating a packet into a satellite protocol stack.

The CU 1050 may configure an NTN SIB (e.g., NR SIB19) and, in this process, may complete the configuration without configuring IEs associated with a satellite network and configurable via interworking with the satellite network. The NTN SIB including no satellite network-related information may be transferred to the gateway 1040 to be transferred to the satellite 1030. The NTN SIB received by the gateway 1040 may have satellite network-related information added by the NTN SIB IE insertion function 1060 before being encapsulated into a satellite protocol stack, and then transmitted to the satellite 1030. A PHY layer of the satellite 1030 may ultimately receive the NTN SIB including all information from the upper layer, and broadcast the NTN SIB at a predetermined interval.

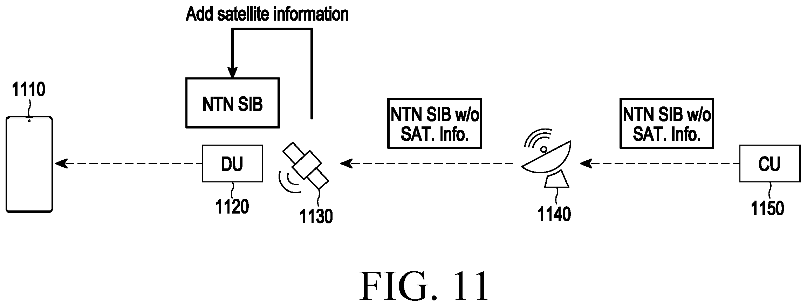

FIG. 11 is a diagram illustrating a process in which a gateway generates an SIB and a satellite adds satellite information according to an embodiment of the disclosure.

Referring to FIG. 11, a communication system may include a UE 1110, a satellite 1130 including a DU 1120, a gateway 1140, and a CU 1150. The CU 1150 may generate an NTN SIB excluding satellite information (or a satellite-related IE). The CU 1150 may transmit the NTN SIB excluding the satellite information (or satellite-related IE) to the DU 1120 through the gateway 1140.

If there is an NTN SIB insertion function in the satellite 1130, and the corresponding function is performed, various state information stored in the satellite, in addition to satellite orbit and location information, may be additionally inserted into the NTN SIB. According to an embodiment, information that may be additionally inserted into the NTN SIB may be inserted when an IE format is specified, in the case of information stored in a database in a satellite OBC.

According to an embodiment, the information additionally inserted into the NTN SIB may include at least one of a satellite power status, the number of UEs accessing the satellite, a satellite processor usage rate, and satellite beam scheduling information. The method for inserting the corresponding information may include 1) performing insertion to the NTN SIB (e.g., SIB19) by predefining an additional IE, or 2) specifying an additional SIB in addition to the NTN SIB and inserting an additional IE into the additional SIB. The above two methods are classified because there is a difference in the method of transmitting an SIB in the current system.

The SIB transmission method may be classified into periodic SI and on-demand SI. Periodic SI is a method in which a base station continuously transmits an SIB at a predetermined period, and on-demand SI is a method in which, when a UE transmits a signal requesting an SIB to a base station, the base station transmits the requested SIB to the UE. Periodic SI is used for SIBs necessary for communication network access, while SIBs that are not necessary are transmitted via the on-demand SI method to reduce transmission overhead for transmitting the SIBs. According to an embodiment, the NTN SIB (e.g., SIB19) may not allow on-demand SI, and may support only the periodic SI method, since the NTN SIB is essential for NTN access.

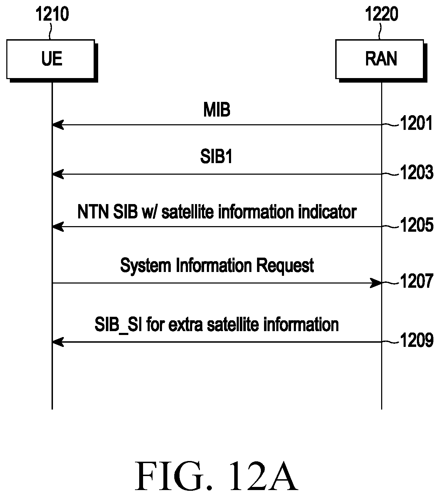

FIG. 12A is a diagram illustrating a process in which a UE requests additional satellite information from a base station according to an embodiment of the disclosure.

Referring to FIG. 12A, in operation 1201, a UE 1210 may receive a master information block (MIB) from an RAN 1220. In operation 1203, the UE 1210 may receive a system information block 1 (SIB1) from the RAN 1220. In operation 1205, the RAN 1220 may transmit an NTN SIB including a satellite information indicator to the UE 1210. According to an embodiment, the satellite information indicator may indicate that additional satellite information exists in addition to a satellite-related IE included in the NTN SIB. In operation 1207, the UE 1210 may transmit a system information request

message to the RAN 1220 to request additional satellite information. In operation 1209, the RAN 1220 may transmit an SIB_SI including the additional satellite information to the UE 1210.

The disclosure proposes a method of transmitting additional information of a satellite through a separate SIB (e.g., SIB19), instead of an existing SIB (e.g., SIB19), according to an on-demand SI method, in addition to a method of inserting additional information into an SIB according to a periodic SI method. When additional satellite-related information is inserted into an existing SIB (e.g., SIB19), an indicator indicating the existence of the additional information is unnecessary. However, when the additional satellite information is transmitted through a separate SIB, an identifier that indicates the existence of the SIB including the additional satellite information is necessary. The corresponding identifier may be located in SIB1 and a SystemInformation message, or may be located in an existing NTN SIB (SIB19).

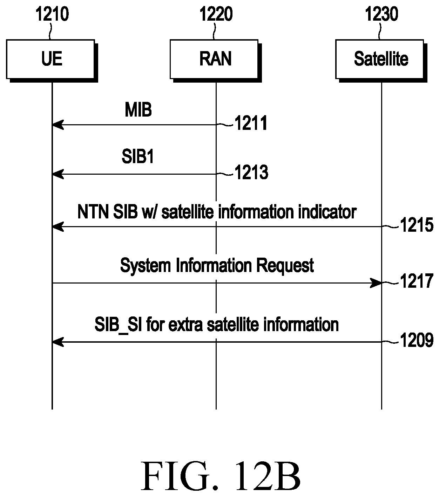

FIG. 12B is a diagram illustrating a process in which a UE requests additional satellite information from a satellite according to an embodiment of the disclosure.

Referring to FIG. 12B, in operation 1211, the UE 1210 may receive a master information block (MIB) from the RAN 1220. In operation 1213, the UE 1210 may receive a system information block 1 (SIB1) from the RAN 1220. In operation 1215, a satellite 1230 may transmit an NTN SIB including a satellite information indicator to the UE 1210. The satellite information indicator may indicate that additional satellite information exists in addition to a satellite-related IE included in the NTN SIB. In operation 1207, the UE 1210 may transmit a system information request message to the satellite 1230 to request additional satellite information. In operation 1209, the satellite 1230 may transmit an SIB_SI including the additional satellite information to the UE 1210.

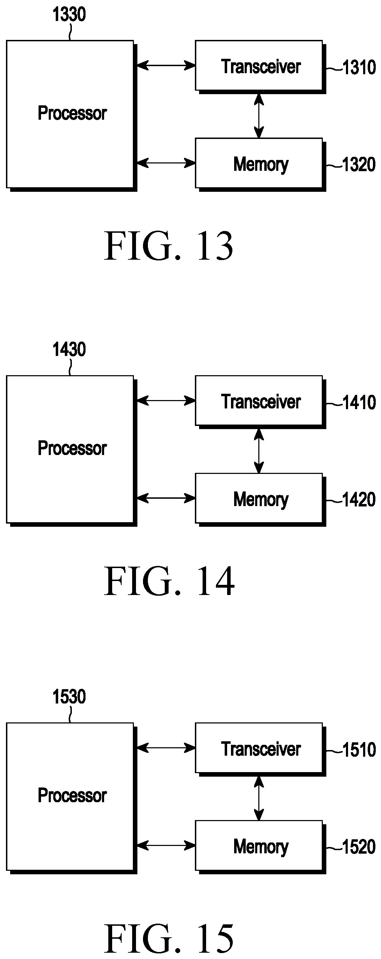

FIG. 13 illustrates a structure of a UE according to an embodiment of the disclosure.

The UE described with reference to FIG. 1 to FIG. 12B may correspond to the UE in FIG. 13. Referring to FIG. 13, the UE may include a transceiver 1310, memory 1320, and a controller 1330.

The transceiver 1310, the controller 1330, and the memory 1320 may be operated according to the above-described communication methods of the UE. However, components of the UE are not limited to the above-described example. For example, the UE may include a larger or smaller number of components than the above-described components. Furthermore, the transceiver 1310, the controller 1330, and the memory 1320 may be implemented in the form of a single chip. In addition, the controller 1330 may include one or more processors.

The transceiver 1310 refers to a UE receiver and a UE transmitter as a whole, and may transmit/receive signals with other devices. To this end, the transceiver 1310 may include an RF transmitter configured to up-convert and amplify the frequency of transmitted signals, an RF receiver configured to low-noise-amplify received signals and down-convert the frequency thereof, and the like. However, this is only an embodiment of the transceiver 1310, and the components of the transceiver 1310 are not limited to the RF transmitter and the RF receiver.

In addition, the transceiver 1310 may receive signals through a radio channel, output the same to the controller 1330, and transmit signals output from the controller 1330 through the radio channel.

The memory 1320 may store programs and data necessary for the operation of the UE. In addition, the memory 1320 may store control information or data included in signals acquired by the UE. The memory 1320 may include storage media such as a ROM, a RAM, a hard disk, a CD-ROM, and a DVD, or a combination of storage media. Also, the memory 1320 may not be a separate component but be a component included in the controller 1330.

The controller 1330 may control a series of processes so that the UE can operate according to the above-described embodiments of the disclosure.

FIG. 14 illustrates a structure of a base station according to an embodiment of the disclosure.

The base station (or RAN) described with reference to FIG. 1 to FIG. 12B may correspond to the base station (or RAN) in FIG. 14. Referring to FIG. 14, the base station may include a transceiver 1410, memory 1420, and a controller 1430. According to an embodiment, the base station may include a CU located on the ground, illustrated in FIG. 1 to FIG. 12B.

The transceiver 1410, the controller 1430, and the memory 1420 may be operated according to the above-described communication methods of the base station. However, components of the base station are not limited to the above-described example. For example, the base station may include a larger or smaller number of components than the above-described components. Furthermore, the transceiver 1410, the controller 1430, and the memory 1420 may be implemented in the form of a single chip. In addition, the controller 1430 may include one or more processors.

The transceiver 1410 refers to a base station receiver and a base station transmitter as a whole, and may transmit/receive signals with other devices. To this end, the transceiver 1410 may include an RF transmitter configured to up-convert and amplify the frequency of transmitted signals, an RF receiver configured to low-noise-amplify received signals and down-convert the frequency thereof, and the like. However, this is only an embodiment of the transceiver 1410, and the components of the transceiver 1410 are not limited to the RF transmitter and the RF receiver.

In addition, the transceiver 1410 may receive signals through a radio channel, output the same to the controller 1430, and transmit signals output from the controller 1430 through the radio channel.

The memory 1420 may store programs and data necessary for the operation of the base station. In addition, the memory 1420 may store control information or data included in signals acquired by the base station. The memory 1420

may include storage media such as a ROM, a RAM, a hard disk, a CD-ROM, and a DVD, or a combination of storage media. Also, the memory 1420 may not be a separate component but be a component included in the controller 1430.

The controller 1430 may control a series of processes so that the base station can operate according to the above-described embodiments of the disclosure.

FIG. 15 illustrates a structure of a satellite according to an embodiment of the disclosure.

The satellite described with reference to FIG. 1 to FIG. 12B may correspond to the satellite in FIG. 15. Referring to FIG. 15, the satellite may include a transceiver 1510, memory 1520, and a controller 1530. According to an embodiment, the satellite may include a DU illustrated in FIG. 1 to FIG. 12B.

The transceiver 1510, the controller 1530, and the memory 1520 may be operated according to the above-described communication methods of the satellite. However, components of the satellite are not limited to the above-described example. For example, the satellite may include a larger or smaller number of components than the above-described components. Furthermore, the transceiver 1510, the controller 1530, and the memory 1520 may be implemented in the form of a single chip. In addition, the controller 1530 may include one or more processors.

The transceiver 1510 refers to a satellite receiver and a satellite transmitter as a whole, and may transmit/receive signals with other devices. To this end, the transceiver 1510 may include an RF transmitter configured to up-convert and amplify the frequency of transmitted signals, an RF receiver configured to low-noise-amplify received signals and down-convert the frequency thereof, and the like. However, this is only an embodiment of the transceiver 1510, and the components of the transceiver 1510 are not limited to the RF transmitter and the RF receiver.

In addition, the transceiver 1510 may receive signals through a radio channel, output the same to the controller 1530, and transmit signals output from the controller 1530 through the radio channel.

The memory 1520 may store programs and data necessary for the operation of the satellite. In addition, the memory 1520 may store control information or data included in signals acquired by the satellite. The memory 1520 may include storage media such as a ROM, a RAM, a hard disk, a CD-ROM, and a DVD, or a combination of storage media. Also, the memory 1520 may not be a separate component but be a component included in the controller 1530.

The controller 1530 may control a series of processes so that the satellite can operate according to the above-described embodiments of the disclosure.

According to an embodiment of the disclosure, a method of operating a network device in a non-terrestrial network may include: an operation of receiving, from a central unit (CU) located in a terrestrial network, a first system information block (SIB) including configuration information associated with the non-terrestrial network, an operation of generating a second SIB by adding an information element (IE) associated with a satellite located in the non-terrestrial network to the first SIB; and an operation of broadcasting the second SIB.

According to an embodiment, the network device may be implemented in at least one of a packet data convergence control (PDCP) layer, a radio link control (RLC) layer, a medium access control (MAC) layer, and a service data adaptation protocol (SDAP) layer in the DU 820.

According to an embodiment, the network device may be implemented in an on-board computer (OBC) in the satellite located in the non-terrestrial network.

According to an embodiment, the network device may be implemented in a gateway located in the terrestrial network.

According to an embodiment, the network device may include an SIB classifier configured to identify the first SIB, a decoder configured to convert a format of the first SIB into a bit format, an SIB modifier (NTN SIB modifier) configured to add an information element (IE) associated with the satellite located in the non-terrestrial network to the first SIB to generate a second SIB, and an encoder configured to convert a format of the second SIB into a format transmitted by the CU.

According to an embodiment, the method of operating the network device may further include an operation of receiving, from a user equipment (UE), a message requesting additional information associated with the satellite, and an operation of transmitting, to the UE, a third SIB including the additional information associated with the satellite.

According to an embodiment, the additional information associated with the satellite may include at least one of a satellite power status, an average satellite antenna pointing error, a satellite attitude error, and a satellite processor usage rate.

According to an embodiment, the CU located in the terrestrial network may be located in a base station and may include a radio resource control (RRC) layer.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of operating a network device in a non-terrestrial network, the method comprising:

   receiving, from a central unit (CU) located in a terrestrial network, a first system information block (SIB) including configuration information for the non-terrestrial network;
   generating a second SIB by adding, to the first SIB, an information element for a satellite located in the non-terrestrial network; and
   broadcasting the second SIB.

2. The method of claim 1, wherein the network device is implemented in at least one of a packet data convergence control (PDCP) layer, a radio link control (RLC) layer, a medium access control (MAC) layer, or a service data adaptation protocol (SDAP) layer within a DU.

3. The method of claim 1, wherein the network device is implemented in an on-board computer (OBC) within the satellite located in the non-terrestrial network.

4. The method of claim 1, wherein the network device is implemented in a gateway located in the terrestrial network.

5. The method of claim 1, wherein the network device comprises:

   an SIB classifier configured to identify the first SIB;
   a decoder configured to convert a format of the first SIB into a bit format;
   an SIB modifier (NTN SIB modifier) configured to generate the second SIB by adding the information element for the satellite located in the non-terrestrial network to the first SIB; and
   an encoder configured to convert a format of the second SIB into a format transmitted by the CU.

6. The method of claim 1, further comprising:

   receiving, from a user equipment (UE), a message requesting additional information on the satellite; and
   transmitting, to the UE, a third SIB including the additional information on the satellite.

7. The method of claim 6, wherein the additional information on the satellite comprises at least one of a satellite power status, an average satellite antenna pointing error, a satellite attitude error, or a satellite processor usage rate.

8. The method of claim 1, wherein the CU located in the terrestrial network is located within a base station and includes a radio resource control (RRC) layer.

**9.** A network device in a non-terrestrial network, the device comprising:

a transceiver; and
a controller,
wherein the controller is configured to perform control to:

receive, from a central unit (CU) located in a terrestrial network, a first system information block (SIB) including configuration information for the non-terrestrial network;
generate a second SIB by adding an information element for a satellite located in the non-terrestrial network to the first SIB; and
broadcast the second SIB.

**10.** The device of claim 9, wherein the network device is implemented in at least one of a packet data convergence control (PDCP) layer, a radio link control (RLC) layer, a medium access control (MAC) layer, or a service data adaptation protocol (SDAP) layer within a DU (820).

**11.** The device of claim 9, wherein the network device is implemented in an on-board computer (OBC) within the satellite located in the non-terrestrial network.

**12.** The device of claim 9, wherein the network device is implemented in a gateway located in the terrestrial network.

**13.** The device of claim 9, wherein the network device comprises:

an SIB classifier configured to identify the first SIB;
a decoder configured to convert a format of the first SIB into a bit format;
an SIB modifier (NTN SIB modifier) configured to generate the second SIB by adding the information element for the satellite located in the non-terrestrial network to the first SIB; and
an encoder configured to convert a format of the second SIB to a format transmitted by the CU.

**14.** The device of claim 9, wherein the controller is configured to perform control:

receive, from a user equipment (UE), a message requesting additional information on the satellite; and
transmit, to the UE, a third SIB including the additional information on the satellite.

**15.** The device of claim 14, wherein the additional information on the satellite comprises at least one of a satellite power status, an average satellite antenna pointing error, a satellite attitude error, or a satellite processor usage rate.

NTN vehicle at time t1
NTN vehicle at time t2
Satellite movement direction
Steerable spot beam
Satellite coverage
Quasi-earth fixed cell

FIG. 1

NTN vehicle at time t1
NTN vehicle at time t2
Satellite
movement direction
Non-Steerable
spot beam
Satellite coverage
Spot beam
movement direcdtion
Earth moving cell

FIG. 2

310
Satellite access network
350
Core network
320
First UE
340
Second UE
330
Terrestrial access network
360
Data Network

FIG. 3

465
Cellular Network Management System
460
External NTN Management System
450
Data Network
CN NFs
CN NFs
CN
430
CU
420
410
DU
Satellite Transport Network
440
User Equipment


FIG. 4A

465
Cellular Network Management System
460
External NTN Management System
440
User Equipment
410
Satellite Transport Network
DU
415
CU
420
CN NFs
CN NFs
CN
430
450
Data Network


FIG. 4B

520
DU
PDCP
RLC
MAC
PHY
SDAP
510
Satellite
530
Gateway
540
CU
RRC
(a) RRC (CU), PDCP/RLC/MAC/PHY (DU) w/o ISL
522
DU
RLC
MAC
PHY
SDAP
512
532
Gateway
542
CU
PDCP
RRC
(b) RRC/PDCP (CU), RLC/MAC/PHY (DU) w/o ISL
524
DU
PDCP
RLC
MAC
PHY
SDAP
514
534
544
CU
RRC
(c) RRC (CU), PDCP/RLC/MAC/PHY (DU) w/ ISL
526
DU
RLC
MAC
PHY
SDAP
516
536
546
CU
PDCP
RRC
(d) RRC/PDCP (CU),RLC/MAC/PHY (DU) w/ ISL

FIG. 5

(a)
610
612
DU
614
616
618
CU
620
· Transmit same SIB via repetition
· Receive changed information when satellite cell is changed, and correct SIB IE based on corresponding information
· *Generate NTN SIB based on periodicity
(b)
630
632
DU
634
636
638
CU
· Additionally configure satellite-related IE that is not configured in NTN SIB
· Transmit same SIB via repetition
· Not configure only satellite-related IE in NTN SIB
· *Generate NTN SIB based on periodicity

FIG. 6

NTN SIB IE insertion function
710
NTN SIB classifier
700
720
ASN.1 decoder
730
NTN SIB IE modifier
740
ASN.1 encoder

FIG. 7

NTN SIB IE insertion function
860
862
NTN SIB classifier
864
ASN.1 decoder
866
NTN SIB IE modifier
868
ASN.1 encoder
820
821
Satellite On-board Computer (OBC)
822
823
824
825
826
RRC
PDCP
RLC
MAC
PHY
850
CU
NTN SIB w/o SAT. Info.
840
NTN SIB w/o SAT. Info.
830
820
DU
NTN SIB
810

FIG. 8

NTN SIB IE insertion function
960
962
NTN SIB classifier
964
ASN.1 decoder
966
NTN SIB IE modifier
968
ASN.1 encoder
930
931
932
933
934
935
PDCP
RLC
MAC
PHY
NTN SIB IE insertion function
Satellite On-board Computer (OBC)
960
950
CU
NTN SIB w/o SAT. Info.
940
NTN SIB w/o SAT. Info.
930
920
DU
NTN SIB
910

FIG. 9

NTN SIB IE insertion function
1060
1062
NTN SIB classifier
1064
ASN.1 decoder
1066
NTN SIB IE modifier
1068
ASN.1 encoder
1060
NTN SIB IE insertion function
1050
CU
NTN SIB w/o SAT. Info.
1040
NTN SIB
1030
1020
DU
NTN SIB
1010


FIG. 10

CU
1150
NTN SIB w/o SAT. Info.
1140
NTN SIB w/o SAT. Info.
1130
Add satellite information
NTN SIB
DU
1120
1110

FIG. 11

1210
UE
1220
RAN
MIB
1201
SIB1
1203
NTN SIB w/ satellite information indicator
1205
System Information Request
1207
SIB_SI for extra satellite information
1209

FIG. 12A

1210
1220
1230
UE
RAN
Satellite
MIB
1211
SIB1
1213
NTN SIB w/ satellite information indicator
1215
System Information Request
1217
SIB_SI for extra satellite information
1209

FIG. 12B

1330
Processor
Transceiver
1310
Memory
1320

FIG. 13

1430
Processor
Transceiver
1410
Memory
1420

FIG. 14

1530
Processor
Transceiver
1510
Memory
1520

FIG. 15

## INTERNATIONAL SEARCH REPORT

International application No.
**PCT/KR2023/019616**

**A. CLASSIFICATION OF SUBJECT MATTER**

**H04W 48/10**(2009.01)i; **H04W 56/00**(2009.01)i; **G01S 19/25**(2010.01)i; **H04W 84/06**(2009.01)i; **H04W 88/08**(2009.01)i

According to International Patent Classification (IPC) or to both national classification and IPC

**B. FIELDS SEARCHED**

Minimum documentation searched (classification system followed by classification symbols)

H04W 48/10(2009.01); H04B 7/185(2006.01); H04W 36/00(2009.01); H04W 36/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비지상 망(NTN), SIB, 위성(satellite), 정보 요소(information element)

**C. DOCUMENTS CONSIDERED TO BE RELEVANT**

| Category* | Citation of document, with indication, where appropriate, of the relevant passages | Relevant to claim No. |
|---|---|---|
| Y<br>A | US 2023-0276349 A1 (QUALCOMM INCORPORATED) 31 August 2023 (2023-08-31)<br>See paragraphs [0104]-[0153]; claim 16; and figures 7-8. | 1,6-7,9,14-15<br>2-5,8,10-13 |
| Y | US 2023-0189088 A1 (LG ELECTRONICS INC.) 15 June 2023 (2023-06-15)<br>See paragraphs [0268]-[0276]; claims 31 and 35; and figure 11. | 1,6-7,9,14-15 |
| A | WO 2022-212482 A1 (INTEL CORPORATION) 06 October 2022 (2022-10-06)<br>See paragraph [0070]; and figure 4. | 1-15 |
| A | WO 2022-226853 A1 (HUAWEI TECHNOLOGIES CO., LTD.) 03 November 2022 (2022-11-03)<br>See paragraphs [0111]-[0118]; and figure 9. | 1-15 |
| A | WO 2022-207805 A1 (FRAUNHOFER-GESELLSCHAFT ZUR FÖRDERUNG DER ANGEWANDTEN FORSCHUNG E.V.) 06 October 2022 (2022-10-06)<br>See claims 1-27. | 1-15 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 August 2024** | **20 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/019616**

| Patent document cited in search report | Publication date (day/month/year) | Patent family member(s) | Publication date (day/month/year) |
|---|---|---|---|
| US 2023-0276349 A1 | 31 August 2023 | CN 117643115 A | 01 March 2024 |
| | | CO 2024000524 A2 | 15 February 2024 |
| | | EP 4381828 A1 | 12 June 2024 |
| | | KR 10-2024-0036019 A | 19 March 2024 |
| | | US 11589292 B1 | 21 February 2023 |
| | | US 2023-0038675 A1 | 09 February 2023 |
| | | WO 2023-015064 A1 | 09 February 2023 |
| US 2023-0189088 A1 | 15 June 2023 | CN 116114360 A | 12 May 2023 |
| | | EP 4195797 A1 | 14 June 2023 |
| | | KR 10-2023-0035599 A | 14 March 2023 |
| | | KR 10-2688339 B1 | 26 July 2024 |
| | | US 11871288 B2 | 09 January 2024 |
| | | WO 2022-030851 A1 | 10 February 2022 |
| WO 2022-212482 A1 | 06 October 2022 | EP 4316045 A1 | 07 February 2024 |
| | | JP 2024-514460 A | 02 April 2024 |
| | | KR 10-2023-0164662 A | 04 December 2023 |
| | | US 2024-0155536 A1 | 09 May 2024 |
| WO 2022-226853 A1 | 03 November 2022 | CN 117356130 A | 05 January 2024 |
| | | EP 4315971 A1 | 07 February 2024 |
| | | JP 2024-517748 A | 23 April 2024 |
| | | US 2024-0056925 A1 | 15 February 2024 |
| WO 2022-207805 A1 | 06 October 2022 | CN 117356079 A | 05 January 2024 |
| | | EP 4315787 A1 | 07 February 2024 |
| | | JP 2024-516788 A | 17 April 2024 |
| | | KR 10-2023-0165817 A | 05 December 2023 |
| | | US 2024-0107480 A1 | 28 March 2024 |

Form PCT/ISA/210 (patent family annex) (July 2022)